(19) Europäisches Patentamt

European Patent Office

Office européen des brevets

(11) **EP 0 573 346 B1**

(12) **FASCICULE DE BREVET EUROPEEN**

(45) Date de publication et mention
de la délivrance du brevet:
**29.03.2000  Bulletin 2000/13**

(51) Int. Cl.[7]: **G06T 17/50**, B29C 67/00

(21) Numéro de dépôt: **93401389.7**

(22) Date de dépôt: **01.06.1993**

(54) **Procédé de fabrication d'un objet fractal par stéréolithographie et objet fractal obtenu par un tel procédé**

Verfahren zur Herstellung eines Fractal Gegenstandes durch stereolithographic und Fractal Gegenstandes aus dieser Methode

Stereolithographic method for making a fractal object and fractal object obtained through such a method

(84) Etats contractants désignés:
**AT BE CH DE DK ES FR GB IE IT LI NL SE**

(30) Priorité: **02.06.1992 FR 9206652**

(43) Date de publication de la demande:
**08.12.1993  Bulletin 1993/49**

(73) Titulaire: **ALCATEL**
**75008 Paris (FR)**

(72) Inventeurs:
• **Dionnet, Vincent**
**F-92120 Montrouge (FR)**
• **Heliodore, Frédéric**
**F-75014 Paris (FR)**

• **Le Mehaute, Alain**
**F-91190 Gif Sur Yvette (FR)**
• **André, Jean-Claude**
**F-54000 Nancy (FR)**

(74) Mandataire: **Scheer, Luc et al**
**COMPAGNIE FINANCIERE ALCATEL**
**Département Propriété Industrielle**
**30, avenue Kléber**
**75116 Paris (FR)**

(56) Documents cités:
**EP-A- 0 322 257          EP-A- 0 463 766**

• **B.B. MANDELBROT 'The fractal geometry of Nature' 1983 , W.H.FREEMAN , NEW YORK**

Il est rappelé que:  Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Le domaine de l'invention est celui des procédés permettant de fabriquer des objets fractals. Il n'existe jusqu'ici aucun procédé de fabrication industrielle de tels objets, le terme fabrication correspondant à la réalisation physique, tri-dimensionnelle, de l'objet fractal.

Les structures fractales sont connues en temps qu'objets mathématiques. Elles sont définies comme étant des structures auto-similaires ayant la même forme dans les petites et les grandes échelles. Elles n'ont pas de longueur caractéristique et leur dimension n'est pas entière (comprise entre 0 et 2).

Il a été montré, par calcul, que les objets fractals présentent des caractéristiques très intéressantes dans de nombreux domaines. De nombreux articles relatent notamment de leurs propriétés tout à fait spécifiques de propagation d'ondes électromagnétiques qui entraînent des modes d'interaction onde-matière particuliers. Ces propriétés n'ont cependant jamais pu être vérifiées expérimentalement puisque ces objets n'étaient pas physiquement réalisables.

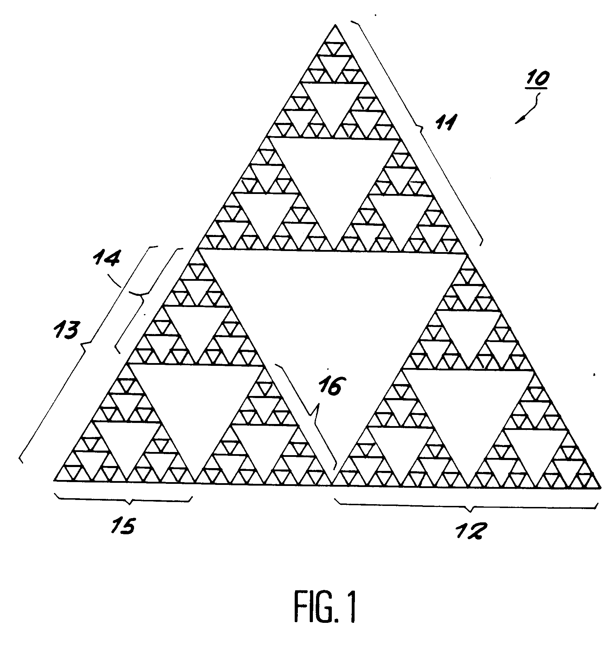

Le problème de leur fabrication est particulièrement mis en évidence dans la figure 1. Cette figure est une vue de face d'une structure fractale appelée tamis de Serpienski.

Le tamis 10 est structuré au moyen de trois triangles 11,12,13 semblables, appelés triangles filles, constituant chacun la réduction homothétique d'un triangle mère. La valeur du rapport des longueurs des côtés entre le triangle mère et les triangles filles est de 1/2, cette valeur correspondant au facteur d'échelle de réduction du triangle mère.

La dimension Δ de cette structure est donnée par la relation:

$$\Delta = \frac{\log N}{\log E}$$

où N est le nombre de triangles filles de la structure fractale et E le facteur d'échelle. Dans le cas de la structure de la figure 1, sa dimension Δ est sensiblement égale à 1,59 puisque le nombre de triangles filles est de 3 et le facteur d'échelle de 2.

Chaque triangle fille 11,12,13 est constitué de trois triangles, par exemple 14,15 et 16 pour le triangle 13. Les triangles 14,15 et 16 sont les triangles filles du triangle 13, constituant de ce fait à son tour un triangle mère. Ces triangles 14,15 et 16 sont eux-mêmes chacun constitués de trois triangles filles, également constitués de triangles filles, et ainsi de suite jusqu'à l'infiniment petit.

Une telle méthode de définition d'une structure fractale est décrite dans ⟨⟨ The fractal geometry of nature ⟩⟩ B.B. Mandelbrot, 1983, W.H. Freeman, New York.

Si l'on imagine cette structure en trois dimensions, il paraît clair qu'aucune machine-outil traditionnelle ne peut réaliser cet objet, puisqu'une machine-outil ne peut pénétrer à l'intérieur d'un objet pour le façonner. Ceci est valable pour tout objet fractal tri-dimensionnel, quelle que soit sa forme.

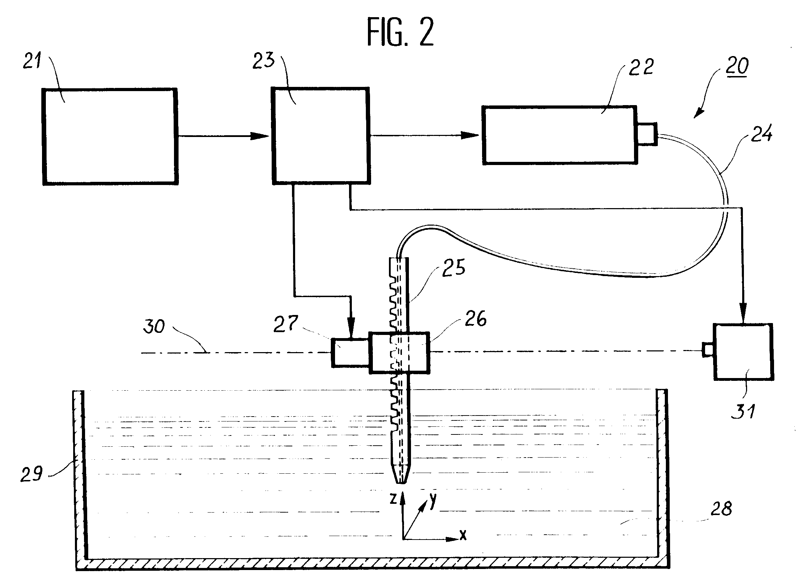

On connaît par ailleurs, dans un autre domaine, un dispositif de stéréolithographie permettant de réaliser des modèles de pièces industrielles, décrit dans la demande de brevet français n° 84.11241 au nom de Compagnie Industrielle des Lasers Cilas Alcatel. Ce dispositif est représente à la figure 2 et référencé 20.

Le dispositif 20 comporte un système 21 de mémoires contenant des informations représentatives de la forme de la pièce industrielle à réaliser. Il comporte également un circuit 23 de traitement, relié au système 21 de mémoires et capable de délivrer, à partir de ces informations, des signaux représentatifs de la position d'éléments du volume de la pièce, ces éléments réunis formant tout le volume de la pièce, ces signaux étant délivrés successivement pour une suite des éléments ordonnés suivant des balayages horizontaux du volume de la pièce. Une cuve 29 contient un volume monomère 28 et l'objet à réaliser sera fabriqué dans cette cuve 29. Le dispositif 20 comporte également un générateur 22 d'un rayonnement laser, relié à la sortie du circuit 23 de traitement, ce rayonnement étant apte à provoquer, par polymérisation, la solidification du liquide monomère 28 lorsqu'il reçoit ce rayonnement, et des moyens 27,31 de commande, constitués par des moteurs, reliés au circuit 23 de traitement, pour diriger le rayonnement laser en réponse à ces signaux, successivement vers des portions du liquide monomère 28 de la cuve 29 afin de solidifier successivement ces portions et former le modèle de pièce industrielle reposant sur le fond de la cuve 29.

Le guidage du rayonnement laser est assuré par une fibre optique 24 engagée dans un manchon 25 formant crémaillère avec des moyens de déplacement 26 commandés par le moteur 27. Le moteur 27 assure un déplacement de l'extrémité de la fibre optique 24 selon un axe Z perpendiculaire au fond de la cuve 29. Le moteur 31 permet un déplacement de l'extrémité de la fibre optique dans un plan 30 parallèle au plan XY constituant le fond de la cuve 29.

La longueur d'onde d'émission du laser 22 est telle que le rayonnement laser provoque une polymérisation du liquide monomère compris dans la cuve, cette polymérisation n'étant réalisée qu'au voisinage de l'entrée du rayonnement dans le liquide 28.

Le balayage du volume de la cuve par l'extrémité de la fibre optique 24 maintenue dans le manchon 25 s'effectue suivant le fond horizontal de la cuve 29, de façon à construire, de proche en proche et successivement, toutes les portions du modèle industriel. A chaque incrément de position suivant l'axe Z, une certaine quantité de liquide monomère est admise dans la cuve, de manière à juste recouvrir les couches déjà polymérisées, et un nouveau cycle de balayage peut alors à nouveau être effectué. Au début d'une fabrication, une solidification d'une partie du modèle est effectuée afin de servir de base stable aux couches successives.

Il existe également d'autres dispositifs de stéréolithographie, tels que ceux décrits dans les demandes de brevet français 85.09054 et 85.09055 également au nom du même déposant.

Dans la première de ces demandes de brevet, un dépôt d'un matériau visqueux contenant une résine monomère est réalisé sur une plaque horizontale à l'aide d'un injecteur. Cet injecteur est déplacé pendant le dépôt suivant un balayage horizontal par plans horizontaux superposés à partir de la plaque et le matériau visqueux est solidifié après sa sortie de l'injecteur. Le débit du matériau visqueux est synchronisé avec le déplacement de l'injecteur de telle sorte que le matériau visqueux solidifié forme, à la fin du balayage, un modèle de forme identique à celle définie dans une mémoire de données à laquelle accède un dispositif de commande de l'injecteur, de son débit et de son déplacement. La solidification peut s'opérer soit par illumination du matériau visqueux après sa sortie de l'injecteur, soit en rendant ce matériau thixotrope.

Dans la deuxième de ces demandes de brevet, l'injecteur dépose un premier liquide dans une cuve contenant un deuxième liquide. Le premier liquide est par exemple un amorceur photochimique apte à provoquer la solidification par illumination du deuxième liquide constitué par une résine monomère.

De façon générale, tous ces dispositifs de stéréolithographie comportent les mêmes éléments de base, à savoir:

- une mémoire de données définissant la forme de l'objet à fabriquer;
- un dispositif de commande qui pilote le déplacement d'un moyen de génération de l'objet à fabriquer, en fonction des données mémorisées, ce moyen de génération pouvant être constitué soit par:
- un faisceau laser associé à un liquide monomère;
- un injecteur de matériau visqueux associé à une plaque horizontale et accessoirement à un rayonnement optique;
- un injecteur d'un premier liquide qui réagit avec un deuxième liquide présent dans une cuve, également accessoirement associé à un rayonnement optique.

Le point commun entre les procédés de fabrication de modèles est donc un balayage horizontal effectué par un moyen de génération de ce modèle à réaliser associé à un durcissement d'un produit, le balayage permettant de réaliser le modèle couche par couche.

Un autre exemple de fabrication d'objets tridimensionnels est exposé dans la demande de brevet EP-0.322.257.

La présente invention a notamment pour objectif de fournir un procédé de fabrication d'objets fractals physiques tri-dimensionnels.

Un autre objectif de l'invention est de fournir un objet fractal tri-dimensionnel obtenu par un tel procédé.

Ces objectifs, ainsi que d'autres qui apparaîtront par la suite, sont atteints grâce à un procédé de fabrication d'objets fractals tridimensionnels consistant à:

- définir géométriquement un générateur mère a l'aide d'informations tridimensionnelles dans un repère spatial;
- réaliser M réductions homothétiques tridimensionnelles du générateur mère, de même rapport N entier et chacune de centre d'homothétie donné, ces réductions fournissant chacune un objet fille et des informations permettant de le situer tri-dimensionnellement par rapport au générateur mère;
- itérer les réductions homothétiques pour chacun des objets filles obtenus à chaque réduction homothétique jusqu'à ce qu'une des dimensions des objets filles devienne inférieure à une valeur de seuil donnée;
- fournir au moins une partie des informations permettant de situer les objets filles par rapport au générateur mère à un dispositif de commande d'un appareil de stéréolithographie qui fabrique l'objet fractal.

Le procédé de l'invention repose donc sur une réduction homothétique d'échelle d'un générateur mère, cette réduction étant réalisée dans les trois dimensions. Les positions des objets filles obtenus sont définies par rapport au générateur mère.

Avantageusement, le dispositif de commande délivre, à partir de ces informations, des signaux représentatifs de la position d'éléments de la structure de l'objet fractal, ces éléments réunis formant toute la structure de l'objet fractal, ces signaux étant délivrés successivement, de façon à définir couche par couche l'objet fractal, à des moyens de déplacement d'un moyen de génération de l'objet fractal et à ce moyen de génération de telle sorte que le moyen de génération fabrique par couches horizontales successives chaque couche de l'objet fractal, le dispositif de commande générant également des signaux représentant des moyens de liaison des objets filles isolés de telle sorte que les objets filles isolés soient reliés entre eux dans les plans des couches.

Préférentiellement, les informations sont constituées par une liste d'arêtes et/ou de sommets et/ou de plans localisant chaque objet fille par rapport au générateur mère.

Avantageusement, les signaux représentant des moyens de liaison pilotent le moyen de génération de telle sorte que les moyens de liaison soient constitués par un quadrillage horizontal sur lequel reposent les objets filles.

Ces signaux sont donc générés par le dispositif de commande, comprenant habituellement un logiciel de CAO.

Selon un mode de mise en oeuvre préférentiel, le moyen de génération de l'objet fractal est constitué par un rayonnement laser apte à provoquer, par polymérisation, la solidification d'un liquide monomère compris dans une cuve, le dispositif de commande dirigeant le rayonnement laser, en réponse aux signaux délivrés par le dispositif de commande, successivement vers des portions du liquide monomère afin de solidifier successivement ces portions et former l'objet fractal reposant sur le fond de la cuve.

La présente invention concerne également un objet fractal obtenu par un tel procédé, cet objet fractal étant de préférence de forme pyramidale.

Selon un mode de réalisation particulier, les objets filles de cet objet fractal sont des pyramides renversées.

D'autres caractéristiques et avantages de l'invention apparaîtront à la lecture de la description suivante d'un mode de réalisation préférentiel, donné à titre illustratif et non limitatif, et des dessins annexés dans lesquels:

- la figure 1 représente une structure fractale connue, appelée pyramide de Serpienski;
- la figure 2 représente un dispositif de stéréo-lithographie de type connu;
- la figure 3 est une vue en perspective d'un générateur mère servant de structure de référence sur lequel une première réduction homothétique est réalisée;
- la figure 4 représente le résultat d'une première étape de réduction homothétique du générateur mère de la figure 3;
- la figure 5 est une vue de face de l'objet fractal de la figure 4;
- la figure 6 est une vue en perspective d'une structure de pyramide inversée à faces pleines, dont les coordonnées sont calculées par le logiciel faisant partie du procédé de la présente invention, cette pyramide pouvant être matérialisée par le dispositif de stéréolithographie de la figure 2;
- la figure 7 est une vue de face d'un objet fractal constitué de pyramides inversées dont les positions sont calculées par le logiciel et matérialisées par le dispositif de stéréolithographie, cet objet étant obtenu après une réduction homothétique de la pyramide inversée de la figure 6;
- la figure 8 est une vue de face d'un objet fractal issu d'une réduction homothétique supplémentaire de la structure de la figure 6;
- la figure 9 est une vue de face d'un autre générateur mère;
- la figure 10 est une vue de face d'un objet fractal obtenu à la suite d'une réduction homothétique du générateur de la figure 9.

Les figures 1 et 2 ont été décrites précédemment en référence à l'état de la technique.

Il est apparu aux inventeurs que le dispositif de stéréolithographie de la figure 2 peut être avantageusement utilisé pour fabriquer des objets fractals. En effet, comme la fabrication du modèle de pièce industrielle est réalisé couche par couche, il est possible de façonner l'intérieur de n'importe quel objet, l'épaisseur minimale d'un point quelconque de cet objet étant fonction du diamètre du faisceau laser. Ainsi, plus le diamètre de ce faisceau est petit, plus l'épaisseur d'une couche de polymère sera réduite, et plus la résolution sera importante. Un faisceau laser correctement focalisé permet donc de polymériser des zones de liquide monomère de taille très réduite et il est alors possible de physiquement matérialiser des objets filles de taille réduite.

Pour un objet fractal, cette caractéristique est intéressante dans la mesure où un objet fractal théorique (une structure fractale) comporte une infinité de sous-motifs (structures filles) de taille de plus en plus réduite. Un faisceau laser étroit permet ainsi d'obtenir une définition tri-dimensionnelle de l'ordre de 100 $\mu$m.

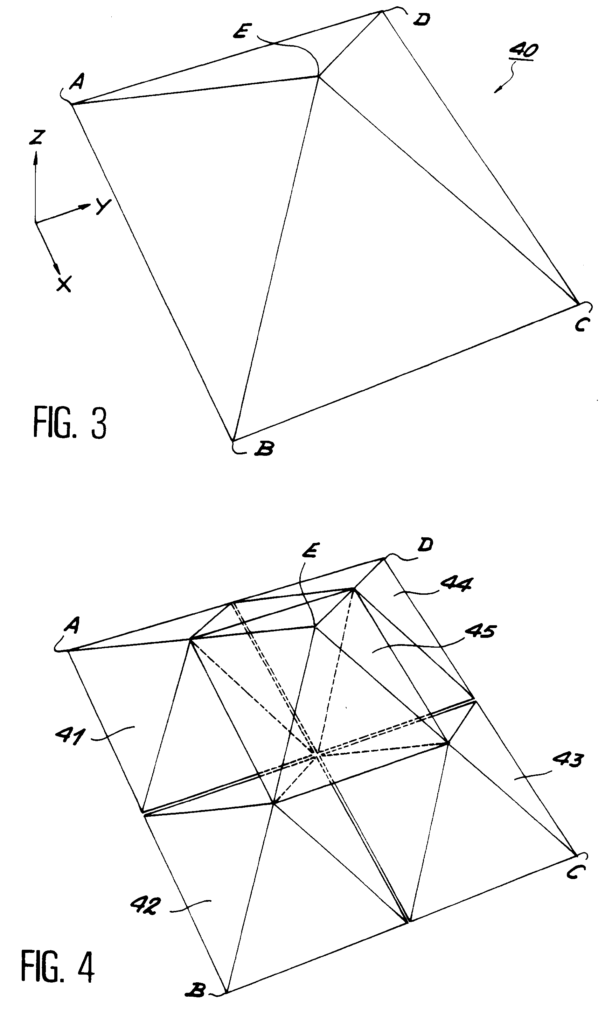

Le procédé de l'invention sera décrit par la suite en référence aux figures 3 à 8 représentant différentes étapes de génération d'objets filles à partir d'un générateur mère constitué par une pyramide. Un générateur mère est par la suite défini comme étant l'objet tri-dimensionnel de départ à partir duquel tous les objets filles seront créés.

Le procédé de l'invention fait appel à un logiciel de définition tri-dimensionnelle d'un objet fractal. Ce logiciel a pour fonction de fournir des informations définissant la forme de l'objet fractal, cet objet étant formé d'une pluralité d'objets filles obtenus par réduction homothétique d'un générateur mère.

La première étape du procédé consiste à définir un générateur mère constitué dans le cas considéré par une pyramide à base carrée, telle que représentée en perspective à la figure 3. Ce générateur mère comporte quatre côtés notés A,B,C,D et un sommet E.

Certaines parties d'un logiciel de définition de l'objet fractal, écrit en Pascal, seront données par la suite pour compléter la description des figures.

La procédure de création du générateur mère est la suivante: AffectePoint(A,0,0,0);

```
AffectePoint(B,10,0,0);
AffectePoint(C,10,10,0);
AffectePoint(D,0,10,0);
AffectePoint(E,5,5,10);
CreeFormePyramide (ItemCourant^^.F,A,B,C,D,E);
AffectePyra (P,A,B,C,D,E);
Traite_Pyramide (P,ItemCourant);
ItemCourant := BaseListeItem;
if FichierInter then
begin
        CreeFichierInter;
end;
```

La procédure AffectePoint est la suivante: procedure AffectePoint (var Pt: pointR3D; x,y,z:real);

```
begin
        Pt.X :=x;
        Pt.Y :=y;
        Pt.Z :=z;
end;
```

La variable PointR3D est un point défini par trois coordonnées. A chacun des points A à E sont affectés trois coordonnées permettant de les situer dans un espace tri-dimensionnel. Les valeurs numériques correspondent par exemple à des centimètres et la pyramide ainsi définie a une base carrée de 10 cm de côté et une hauteur de 10 cm.

FichierInter est un fichier dans lequel toutes les coordonnées des structures tri-dimensionnelles définies par le logiciel sont mémorisées.

Une fois le générateur mère défini, une procédure de définition de l'objet fractal est lancée. Cette procédure est appelée Traite_Pyramide:

```
procedure Traite_Pyramide (p: pyramide; var h:hdlItem);
        var
        Ta,Tb,Tc,Td,Te,Tf,Tg,Th,Ti,Tj,Tk,Tl,Tm,Tn:PointR3D;
        P1: pyramide;
begin
        Ta := P.A;              (1)
        Tb := P.B;
        Tc := P.C;
        Td := P.D;
        Te := P.E;
        Tf := Milieu_Seg(P.A,P.C);
        Tg := Milieu_Seg(P.A,P.D);
        Th := Milieu_Seg(P.A,P.B);
        Ti := Milieu_Seg(P.B,P.C);
        Tj := Milieu_Seg(P.C,P.D);
        Tk := Milieu_Seg(P.E,P.A);
        Tl := Milieu_Seg(P.E,P.B);
        Tm := Milieu_Seg(P.E,P.C);
        Tn := Milieu_Seg(P.E,P.D);
        h^^.Suiv := CreerItem;             (2)
        h := h^^.Suiv;
        CreeFormePyramide(h^^.F,tk,tl,tm,tn,tf);
```

Cette partie de procédure qui fait appel à la fonction Milieu_Seg (séquence d'instructions n°1), calcule les coordonnées des points situés au milieu des segments de droites présents entre deux points du générateur mère constitué par la pyramide de la figure 3. Le rapport de réduction homothétique du générateur est donc de 1/2. Ce rapport peut bien entendu être différent. Cette procédure fait également appel à une procédure CreeFormePyramide (séquence d'instructions n°2) qui permet de mémoriser la forme d'une pyramide inversée et sa position par rapport au générateur mère, en fait par rapport à l'intersection des axes X,Y et Z de la figure 3, dans la mémoire FichierInter. Dans ce mode de réalisation, seules les pyramides inversées sont effectivement fabriquées et donc seules les informations concernant ces pyramides sont mémorisées. La procédure CreeFormePyramide sera décrite par la suite.

La procédure se poursuit par:

5

```
if (abs(th.x - ta.x) > epsilon) then          (3)
      begin
            AffectePyra(P1,Ta,Th,Tf,Tg,Tk);      (4)
            Traite_Pyramide(P1,h);
            AffectePyra(P1,Th,Tb,Ti,Tf,Tl);      (5)
            Traite_Pyramide(P1,h);
            AffectePyra(P1,Tf,Ti,Tc,Tj,Tm);      (6)
            Traite_Pyramide(P1,h);
            AffectePyra(P1,Tg,Tf,Tj,Td,Tn);      (7)
            Traite_Pyramide(P1,h);
            AffectePyra(P1,Tk,Tl,Tm,Tn,Te);      (8)
            Traite_Pyramide(P1,h);
      end;
end;
```

La séquence d'instructions n°3 est un test conditionnant la poursuite des réductions homothétiques. Dans le cas présent, il est vérifié que la distance sur l'axe X séparant le sommet de la pyramide inversée du point A servant de référence est supérieure à une valeur de seuil epsilon prédéfinie, epsilon correspond donc à une distance minimale à respecter entre deux points quelconques de l'objet fractal, dans le plan XY.

Dans le meilleur des cas, la valeur de epsilon correspond à la surface présentée par le rayonnement laser, lorsqu'un laser est utilisé pour réaliser la polymérisation d'un liquide monomère tel que représenté à la figure 2. Si le dispositif de stéréolithographie est conforme à celui des demandes de brevet français 85.09054 et 85.09055 précitées, epsilon correspond au diamètre de l'injecteur. Le pas selon la direction Z est quant à lui réglé par le logiciel de CAO compris dans le dispositif de commande du moyen de génération de l'objet. Ce pas est par exemple de 50 $\mu$m. Le moyen de génération est cependant préférentiellement constitué par un faisceau laser illuminant un liquide monomère, cette technique de fabrication étant parfaitement au point.

Les étapes de traitement 4 à 8 constituent des boucles de traitement ayant pour objet de définir les coordonnées de toutes les pyramides inversées calculées par récurrence, qui respectent la condition imposée par la valeur de epsilon. Chaque objet mère subit une réduction homothétique interne de façon à générer un objet fille, chaque objet fille subissant le même traitement jusqu'à ce que la valeur epsilon soit atteinte. La procédure passe alors à la pyramide inversée située à côté de la dernière traitée, qui est la dernière pyramide fille, c'est à dire celle de taille la plus réduite. Il est bien entendu possible de procéder de manière différente pour calculer les coordonnées de chaque objet fille, par exemple calculer les coordonnées de tous les objets filles (5 au total) issus d'un même objet mère.

A la fin des étapes de traitement 4 à 8, les coordonnées de toutes les pyramides inversées, quelle que soit leur taille, sont mémorisées dans FichierInter. Dans le cas présent, étant donné la forme d'une pyramide, cinq étapes de traitement sont nécessaires puisque chaque pyramide mère est constituée de cinq pyramides filles.

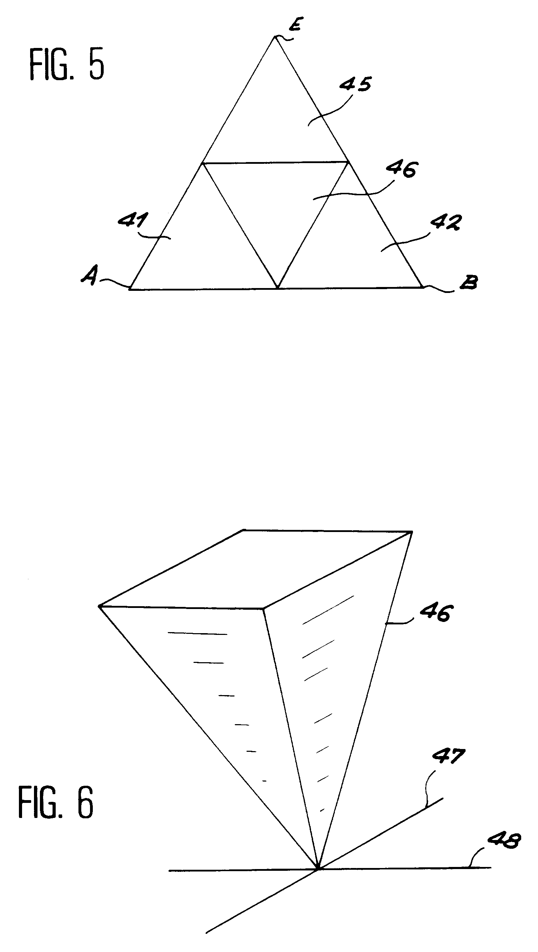

La figure 5 est une vue de face de la pyramide de la figure 4. Elle représente la face délimitée par les points A, B et E. Les trois autres faces de l'objet ainsi défini sont identiques. Cet objet est donc déjà un objet fractal.

Les pyramides 41, 43 et 45 sont par exemple vides et seules leurs arêtes peuvent être réalisés par l'appareil de stéréolithographie. Elles peuvent également être munies de faces pleines.

Dans un mode de réalisation préférentiel, les cinq pyramides générées sont creuses et ne comportent pas de faces pleines. Cette configuration peut être réalisée soit par le dispositif de CAO assurant la découpe par tranches successives de l'objet représenté sous forme de coordonnées de points.

Sous la pyramide 45 se trouve une pyramide inversée 46. Cette pyramide 46 est représentée en perspective à la figure 6. Elle comporte des faces pleines reliant sa base au sommet et son intérieur est creux. Comme sa base est tournée vers le sommet E de l'objet fractal, elle forme ce qui peut être assimilé à une antenne.

Selon un mode de mise en oeuvre préférentiel du procédé de l'invention, toutes les pyramides qui seront effectivement réalisées par le dispositif de stéréolithographie sont des pyramides inversées. Les réductions homothétiques sont opérées sur les structures filles conformes au générateur mère de la figure 3, mais, à chaque itération, seule la pyramide renversée située entre les cinq pyramides obtenues est mémorisée pour être matérialisée. D'autres modes de mise en oeuvre sont bien entendu possibles.

Cette mise en oeuvre du procédé de l'invention revient à considérer la pyramide inversée de plus grande taille comme étant un générateur mère. Dans cette mesure, la définition de ce générateur mère de forme pyramidale inversée ne fait pas partie du procédé de l'invention et les informations permettant de le définir sont entrées de la même manière que celles permettant de préciser la forme de la pyramide 40 de la figure 3. L'objet fractal fabriqué dans cet exemple de réalisation est par exemple utilisé pour effectuer des tests d'absorption d'ondes électromagnétiques, la forme d'antenne obtenue s'apprêtant à cette application.

Il est donc possible de considérer que le générateur mère est constitué par une pyramide telle que représentée à la figure 5, comportant une pyramide renversée à faces pleines. Cependant, comme après réductions homothétiques, seules les pyramides renversées sont matérialisées, le générateur est en fait constitué par la pyramide renversée à faces pleines de la figure 6.

Par ailleurs, lors de la définition d'un objet fractal devant être fabriqué par un dispositif de stéréolithographie, il est nécessaire de s'assurer que tous les éléments qui auront été définis, c'est à dire tous les objets filles, sont reliés entre eux. Si un de ces objets filles défini par calcul n'est pas physiquement lié à un autre objet, il ne pourra faire partie de l'objet fractal final. De ce fait, la liaison entre les objets filles est réalisée par des moyens de liaison constitués par exemple de segments de droites, réalisés par le dispositif de stéréolithographie.

Ces segments de droite peuvent par exemple être automatiquement inclus dans l'objet fractal par le logiciel de CAO lors de la fabrication de cet objet.

Le logiciel de CAO, constituant le dispositif de commande du moyen de génération, réalise notamment de tels segments de droite avant de fabriquer l'objet fractal, afin que celui-ci repose sur un support posé sur le fond de la cuve contenant le liquide monomère. Ce support est par exemple constitué d'un quadrillage comportant un premier jeu de segments parallèles sécants à angle droit avec un deuxième jeu de segments parallèles. Dans le mode de mise en oeuvre de l'invention, un tel quadrillage est présent sous la pyramide 40 ainsi qu'à chaque niveau où reposent les sommets des pyramides filles de la taille la plus petite. Plus précisément, chaque sommet d'une quelconque de ces pyramides repose sur une intersection de deux segments de droites à angle droit.

Ces moyens de liaison peuvent également être définis par le logiciel faisant l'objet de la présente invention, par exemple par la procédure suivante:

```
if FaireGrille then
    begin
        F.Sommet[5] := Milieu_Seg(A,B);
        F.Sommet[5].z := E.z;
        F.Sommet[6] := Milieu_Seg(B,C);
        F.Sommet[6].z := E.z;
        F.Sommet[7] := Milieu_Seg(C,D);
        F.Sommet[7].z := E.z;
        F.Sommet[8] := Milieu_Seg(D,A);
        F.Sommet[8].z := E.z;
        F.NbSommets :=9;

        F.Aretes[8,0] :=5;
        F.Aretes[8,1] :=7;
        F.Aretes[9,0] :=6;
        F.Aretes[9,1] :=8;
        F.NbAretes :=10;
    end;
end;

AffectePyra(P,A,B,C,D,E);
Traite_Pyramide(P,ItemCourant);
CreeFinchierInter;
end;
```

Les sommets des pyramides renversées reposent donc sur des intersections de segments de droites matérialisées par le moyen de génération de l'objet fractal, ces segments de droite formant un quadrillage prévu par le logiciel du procédé de la présente invention.

Les moyens de maintien peuvent également être constitués de segments de droites faisant partie du générateur mère. Ce mode de mise en oeuvre est illustré par les croisillons 47 et 48 à angle droit de la figure 6. Les réductions homothétiques de cette structure, considérée alors comme étant un générateur mère, fournissent des objets filles dont les croisillons se mettent bout à bout de façon à former un quadrillage continu conférant également une certaine résistance mécanique à l'objet fractal. Les croisillons doivent bien entendu présenter une longueur suffisante pour que deux croisillons adjacents d'objets filles soient reliés lors de la fabrication de l'objet, c est à dire aboutir à un même point.

La procédure Traite_Pyramide fait également appel à une procédure AffectePyra qui est la suivante:
procedure AffectePyra (var P: Pyramide;a,b,c,d,e: pointR3D);
begin

```
        P.a :=a;
        P.b :=b;
        P.c :=c;
        P.d :=d;
        P.e :=e;
        end;
```

La fonction Milieu_Seg appelée est la suivante: function Milieu_Seg (A,B:pointR3D):pointR3D;

```
        var
        C:pointR3D;
begin
        C.x := A.X + (B.x - A.x)/2;
        C.y := A.Y + (B.y - A.y)/2;
        C.z := A.Z + (B.z - A.z)/2;
        Milieu_Seg :=C;
end;
```

Cette fonction calcule ainsi le milieu de chaque segment reliant deux points considérés. On retrouve ici le rapport de réduction homothétique qui est de 1/2. Ce rapport de réduction est toujours de 1/N, avec N entier (N=2, 3, 4,...).

La procédure Traite_Pyramide appelle aussi une procédure CreeFormePyramide:
procedure CreeFormePyramide (var F: Forme; A,B,C,D,E: PointR3D);
begin

```
F.Sommet[0] :=A;
F.Sommet[1] :=B;
F.Sommet[2] :=C;
F.Sommet[3] :=D;
F.Sommet[4] :=E;
F.NbSommets =5;
```

Cette partie de procédure affecte un numéro à chacun des points A à E. Elle se poursuit par:

```
{Arêtes de la base de la pyramide}
F.Aretes[0,0] :=0;{arête A,B}
F.Aretes[0,1] :=1;
F.Aretes[1,0] :=1;          {arête B,C}
F.Aretes[1,1] :=2;
F.Aretes[2,0] :=2;          {arête C,D}
F.Aretes[2,1] :=3;
F.Aretes[3,0] :=0;          {arête A,D}
F.Aretes[3,1] :=3;
```

Chaque couple d'instructions affecte un numéro d'arête à chaque segment reliant deux points de la base de la pyramide. Ainsi, les arêtes A,B; B,C; C,D; A,D ont pour numéros respectifs 0,1,2 et 3.

Cette opération est également réalisée pour les arêtes en liaison avec le sommet E de la pyramide:

```
F.Aretes[4,0] :=0;          {arête A,E}
F.Aretes[4,1] :=4;
F.Aretes[5,0] :=1;          {arête B,E}
F.Aretes[5,1] :=4;
F.Aretes[6,0] :=2;          {arête C,E}
F.Aretes[6,1] :=4;
F.Aretes[7,0] :=3;          {arête D,E}
F.Aretes[7,1] :=4;
F.NbAretes =8;          {8 arêtes au total}
```

Enfin, les quatre faces de la pyramide sont numérotées:

```
F.Faces[0,0] :=0;          {face A,B,E}
F.Faces[0,1] :=4;
F.Faces[0,2] :=5;
F.Faces[1,0] :=1;          {face B,C,E}
F.Faces[1,1] :=5;
```

F.Faces[1,2] :=6;
F.Faces[2,0] :=2;          {face C,D,E}
F.Faces[2,1] :=6;
F.Faces[2,2] :=7;
F.Faces[3,0] :=3;          {face A,D,E}
F.Faces[3,1] :=4;
F.Faces[3,2] :=7;
F.NbFaces =4;          {4 faces au total}

Il est possible de mémoriser les formes et positions de chaque objet fille à partir d'informations correspondant à des points, des segments de droites et/ou des plans. Dans un mode de réalisation préférentiel, seul des points sont mémorisés et le logiciel de CAO compris dans le dispositif de stéréolithographie génère automatiquement des segments de droites ou alors des plans pleins à partir de ces informations constituées de coordonnées de points. FichierInter correspond par exemple à la mémoire 21 de la figure 2.

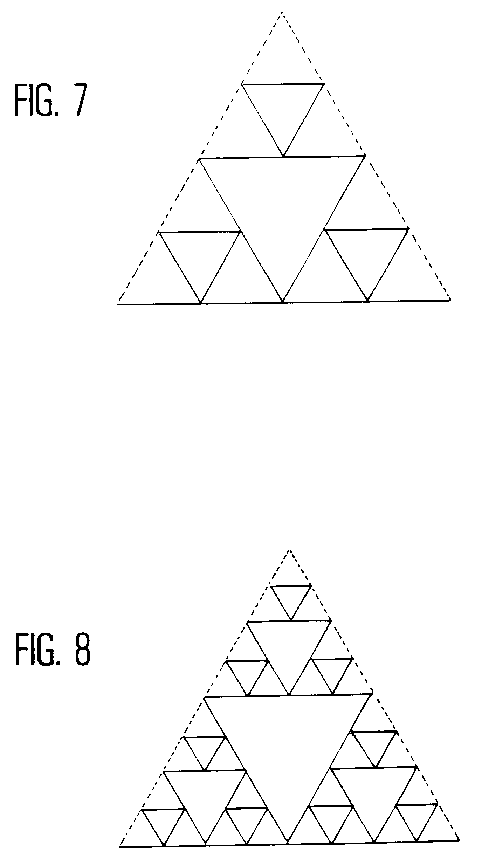

Les figures 7 et 8 sont deux vues de face de deux objets fractals obtenus pour des valeurs de epsilon différentes. La figure 7 présente le résultat obtenu pour une récurrence (réduction homothétique) d'une pyramide fille de l'objet de la figure 5 et la figure 8 pour une récurrence supplémentaire. Les arêtes du générateur mère sont représentés en traits pointillés puisqu'elles peuvent ne pas être matérialisées. Seules sont ici matérialisées les pyramides renversées, leurs sommets reposant par exemple sur des croisillons tels que décrits en référence à la figure 6.

Des essais réalisés en laboratoire, mettant en oeuvre un rayonnement laser qui polymérise un liquide monomère présent dans une cuve, ont permis d'obtenir des objets fractals de ce type de 10 cm de côté et de haut, ces objets étant constitués de pyramides filles issues de 5 récurrences successives de la pyramide renversée de taille la plus importante, pouvant donc être considérée comme constituant un générateur mère.

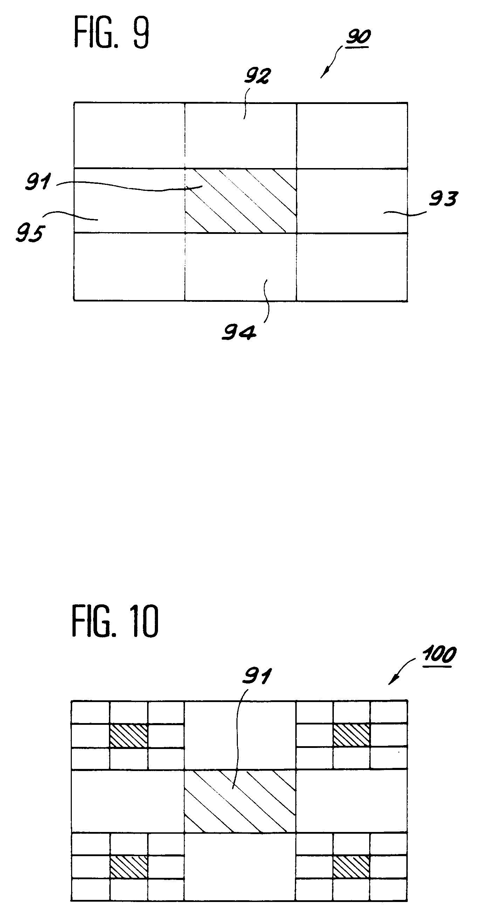

Bien entendu, le procédé de l'invention s'applique également à la fabrication d'autres objets fractals, comme par exemple ceux issus d'un générateur tel que représenté à la figure 9.

La figure 9 est une vue de face d'un générateur mère 90 constitué d'une "brique" comportant un orifice central rectangulaire 91, hachuré sur la figure.

La figure 10 montre un exemple d'objet fractal obtenu après une réduction homothétique du générateur mère 90, les objets filles étant disposés en quinconce par rapport à l'orifice 91. Ces objets filles auraient bien entendu pu également être placés aux emplacements 92 à 95 (figure 9). Chaque objet fille présente donc la même forme que le générateur mère 90 et les réductions homothétiques successives des objets filles peuvent être poursuivies, jusqu'à atteindre la définition maximale imposée par le dispositif de stéréolithographie.

## Revendications

**1.** Procédé de fabrication d'objets fractals tridimensionnels, caractérisé en ce qu'il consiste à :

- définir géométriquement un générateur mère (40,46,90) à l'aide d'informations tridimensionnelles dans un repère spatial;
- réaliser M réductions homothétiques tridimensionnelles dudit générateur mère(40,46,90), de même rapport N entier et chacune de centre d'homothétie donné, ces réductions fournissant chacune un objet fille (41,42,43,44,45,46) et des informations permettant de le situer tri-dimensionnellement par rapport audit générateur mère (40,46,90);
- itérer lesdites réductions homothétiques pour chacun desdits objets filles (41,42,43,44,45,46) obtenus à chaque réduction homothétique jusqu'à ce qu'une des dimensions desdits objets filles devienne inférieure à une valeur de seuil donnée;
- fournir au moins une partie desdites informations permettant de situer lesdits objets filles (41,42,43,44,45,46) par rapport audit générateur mère (40,46,90) à un dispositif de commande (23) d'un appareil de stéréolithographie qui fabrique ledit objet fractal.

**2.** Procédé selon la revendication 1, caractérisé en ce que ledit dispositif de commande (23) délivre, à partir de ces informations, des signaux représentatifs de la position d'éléments de la structure dudit objet fractal, ces éléments réunis formant toute la structure dudit objet fractal, ces signaux étant délivrés successivement, de façon à définir couche par couche ledit objet fractal, à des moyens de déplacement (27,31) d'un moyen de génération (22) dudit objet fractal et à ce moyen de génération (22) de telle sorte que ledit moyen de génération (22) fabrique par couches horizontales successives chaque couche dudit objet fractal, ledit dispositif de commande (23) générant également des signaux représentant des moyens de liaison (47,48) des objets filles.

**3.** Procédé selon l'une des revendications 1 et 2, caractérisé en ce que lesdites informations sont constituées par une liste d'arêtes et/ou de sommets et/ou de plans localisant chaque objet fille par rapport audit générateur mère (40,46,90).

4. Procédé selon l'une des revendications 2 et 3, caractérisé en ce que lesdits moyens de liaison (47,48) sont constitués par un quadrillage horizontal sur lequel reposent lesdits objets filles (41,42,43,44,45,46).

5. Procédé selon l'une des revendications 1 à 4, caractérisé en ce que ledit moyen de génération dudit objet fractal est constitué par un rayonnement laser (22) apte à provoquer, par polymérisation, la solidification d'un liquide monomère (28) compris dans une cuve (29), ledit dispositif de commande (23) dirigeant ledit rayonnement laser (22), en réponse auxdits signaux, successivement vers des portions dudit liquide monomère (28) afin de solidifier successivement ces portions et former ledit objet fractal reposant sur le fond de ladite cuve (29).

6. Objet fractal obtenu par un procédé selon l'une quelconque des revendications 1 à 5, caractérisé en ce qu'il est de forme pyramidale.

7. Objet fractal selon la revendication 6, caractérisé en ce que lesdits objets filles sont des pyramides renversées (46).

**Claims**

1. A method of manufacturing three-dimensional fractal objects, said method being characterized in that it consists in:

    geometrically defining a parent generator object (40, 46, 90) by means of three-dimensional data in a three-dimensional frame of reference;
    performing M three-dimensional scaling reductions on said parent generator object (40, 46, 90), each having the same integer ratio N and each having a given scaling center, said reductions each supplying a daughter object (41, 42, 43, 44, 45, 46) and data enabling it to be situated three-dimensionally relative to said parent generator object (40, 46, 90);
    repeating said scaling reductions for each of said daughter objects (41, 42, 43, 44, 45, 46) obtained by each scaling reduction until the dimensions of said daughter objects become less than a given threshold value; and
    supplying at least part of said data enabling said daughter objects (41, 42, 43, 44, 45, 46) to be situated relative to said parent generator object (40, 46, 90) to a control device (23) for controlling stereolithographic apparatus which manufactures said fractal object.

2. A method according to claim 1, characterized in that said control device (23) uses the data to supply signals representative of the position of elements making up the structure of said fractal object, the elements co-operating with one another to form the entire structure of said fractal object, the signals being supplied successively so as to define said fractal object layer by layer both to displacement means (27, 31) for displacing generator means (22) for generating said fractal object, and also to the generator means (22) so that said generator means (22) manufacture each layer of said fractal object in successive horizontal layers, said control device (23) also generating signals representing linking means (47, 48) for linking daughter objects.

3. A method according to claim 1 or 2, characterized in that said data is constituted by a list of edges and/or vertices and/or planes locating each daughter object relative to said parent generator object (40, 46, 90).

4. A method according to claim 2 or 3, characterized in that said linking means (47, 48) are constituted by a horizontal grid on which said daughter objects (41, 42, 43, 44, 45, 46) stand.

5. A method according to any one of claims 1 to 4, characterized in that said generator means for generating said fractal object are constituted by laser radiation (22) suitable for causing a monomer liquid (28) contained in a tank (29) to solidify by polymerization, said control device (23) responding to said signals by directing said laser radiation (22) towards successive portions of said monomer liquid (28) so that the portions are successively solidified to form said fractal object standing on the bottom of said tank (29).

6. A fractal object obtained by using a method according to any one of claims 1 to 5, characterized in that it is pyramid-shaped.

7. A fractal object according to claim 6, characterized in that said daughter objects are inverted pyramids (46).

**Patentansprüche**

1. Verfahren zur Herstellung dreidimensionaler fraktaler Gegenstände, dadurch gekennzeichnet, dass es darin besteht:

   - mit Hilfe von dreidimensionalen Informationen in einem räumlichen Bezugssystem eine Muttererzeugende (40, 46, 90) geometrisch zu definieren;
   - M dreidimensionale homothetische Reduktionen der Muttererzeugenden (40, 46, 90) mit dem gleichen ganzzahligen Verhältnis N und jeweils mit einem gegebenen Homothetiezentrum auszuführen, wobei diese Reduktionen jeweils ein Tochterobjekt (41, 42, 43, 44, 45, 46) und Informationen liefern, die gestatten, es in bezug auf die Muttererzeugende (40, 46, 90) dreidimensional anzuordnen;
   - die homothetischen Reduktionen für jedes der Tochterobjekte (41, 42, 43, 44, 45, 46), die bei jeder homothetischen Reduktion erhalten wurden, zu iterieren, bis eine der Dimensionen der Tochterobjekte kleiner als ein gegebener Schwellenwert wird;
   - wenigstens einen Teil der Informationen, die gestatten, die Tochterobjekte (41, 42, 43, 44, 45, 46) in bezug auf die Muttererzeugende (40, 46, 49) anzuordnen, an eine Steuereinrichtung (23) eines Stereolithographiegeräts zu liefern, das den fraktalen Gegenstand herstellt.

2. Verfahren nach Anspruch 1, dadurch gekennzeichnet, dass die Steuereinrichtung (23) ausgehend von diesen Informationen Signale liefert, die die Position von Elementen der Struktur des fraktalen Gegenstandes darstellen, wobei diese vereinigten Elemente die gesamte Struktur des fraktalen Gegenstandes bilden, wobei diese Signale, um den fraktalen Gegenstand Schicht für Schicht zu definieren, nacheinander an Mittel (27, 31) zum Verschieben eines Mittels (22) zum Erzeugen des fraktalen Gegenstandes und an dieses Erzeugungsmittel (22) so geliefert werden, dass das Erzeugungsmittel (22) durch aufeinanderfolgende horizontale Schichten jede Schicht des fraktalen Gegenstandes herstellt, wobei die Steuereinrichtung (23) auch Signale erzeugt, die Mittel (47, 48) zur Verbindung der Tochterobjekte darstellen.

3. Verfahren nach einem der Ansprüche 1 und 2, dadurch gekennzeichnet, dass die Informationen aus einer Liste von Schnittlinien und/oder Scheiteln und/oder Ebenen besteht, die jedes Tochterobjekt in bezug auf die Muttererzeugende (40, 46, 90) lokalisieren.

4. Verfahren nach einem der Ansprüche 2 und 3, dadurch gekennzeichnet, dass die Verbindungsmittel (47, 48) aus einem horizontalen quadratischen Liniennetz bestehen, auf welchem die Tochterobjekte (41, 42, 43, 44, 45, 46) ruhen.

5. Verfahren nach einem der Ansprüche 1 bis 4, dadurch gekennzeichnet, dass das Mittel zur Erzeugung des fraktalen Gegenstandes aus einer Laserstrahlung (22) besteht, die fähig ist, durch Polymerisierung die Verfestigung eines in einer Küvette (29) enthaltenen flüssigen Monomers (28) hervorzurufen, wobei die Steuereinrichtung (23) die Laserstrahlung (22) in Antwort auf die Signale nacheinander auf Anteile dem flüssigen Monomers (28) richtet, um diese Anteile nacheinander zu verfestigen und den fraktalen Gegenstand zu bilden, der auf dem Boden der Küvette (29) ruht.

6. Fraktaler Gegenstand, der durch ein Verfahren nach einem der Ansprüche 1 bis 5 erhalten wurde, dadurch gekennzeichnet, dass er eine Pyramidenform hat.

7. Fraktaler Gegenstand nach Anspruch 6, dadurch gekennzeichnet, dass die Tochterobjekte umgekehrte Pyramiden (46) sind.

FIG. 1

# FIG. 2

EP 0 573 346 B1

FIG. 3

FIG. 4

14

EP 0 573 346 B1

FIG. 5

E

45

46

41

42

A

B

FIG. 6

46

47

48

15

FIG. 7

FIG. 8

## FIG. 9

## FIG. 10